# EUROPEAN PATENT APPLICATION

(11) **EP 2 458 711 A2**
(43) Date of publication of application: **30.05.2012**
(21) Application number: 11191200.2
(22) Date of filing: 29.11.2011
(51) Int. Cl.: H02K 1/14, H02K 1/27

(54) **Magnet embedded rotor, electric motor, and assembly method of electric motor**

(30) Priority: 30.11.2010 JP 2010267679
(71) Applicant: Fujitsu General Limited, Kawasaki-shi Kanagawa 213-8502 (JP)
(72) Inventor: Taema, Yoshihiro, KAWASAKI-SHI, KANAGAWA, 213-8502 (JP); Yamada, Masaki, KAWASAKI-SHI, KANAGAWA, 213-8502 (JP); Ashimori, Takeaki, KAWASAKI-SHI, KANAGAWA, 213-8502 (JP); Hasegawa, Tomooki, KAWASAKI-SHI, KANAGAWA, 213-8502 (JP)
(74) Representative: Kreutzer, Ulrich

(57) **Abstract**

According to one embodiment, a magnet embedded rotor includes a rotor iron core (11, 211, 311) and a permanent magnet (30, 430). The rotor iron core (11, 211, 311) is formed of a magnet into a cylindrical shape and provided with holes. The rotor iron core (11, 211, 311) includes a nonmagnetic portion (23, 423), salient poles (22, 422), a notch groove (26, 426), a bridge (25, 425), and a first protrusion (27, 427). The nonmagnetic portion (23, 423) prevents magnetic-flux short circuiting. The salient poles (22, 422) are located on the outer circumferential side of the holes. The notch groove (26, 426) is located between an adjacent pair of the salient poles (22, 422). The bridge (25, 425) is located between the notch groove (26, 426) and the nonmagnetic portion (23, 423). The first protrusion (27, 427) protrudes outward from the center of the notch groove (26, 426). The permanent magnet (30, 430) is embedded in each hole. The radius of each salient pole (22, 422) gradually decreases from the center toward the notch groove (26, 426). The radius of the first protrusion (27, 427) is equal to that of the center of the salient pole (22, 422).

## Description

### FIELD

The embodiments discussed herein are directed to a magnet embedded rotor, an electric motor, and an assembly method of the electric motor.

### BACKGROUND

For example, Japanese Laid-open Patent Publication No. 2009-112166 discloses a conventional magnet embedded rotor comprising permanent magnets embedded in an iron core of a rotor at predetermined intervals. In the conventional magnet embedded rotor, notches and first protrusions are formed in outer peripheral surfaces between salient poles, which correspond to the permanent magnets, in the rotor core. Nonmagnetic portions for preventing magnetic-flux short circuiting are formed at both ends of each permanent magnet. A bridge between the nonmagnetic portions and the notches is narrowed to such an extent that the bridge is magnetically saturated. The circumferential width on the starting edge side of the first protrusion is formed larger than the circumferential width on the tip side.

Besides, for example, Japanese Laid-open Patent Publication No. H11-178293 discloses a conventional assembly method of a motor, in which a bearing having an outer diameter less than the inner diameter of a trunk casing is attached in both ends of the trunk casing into which a stator is inserted internally, and a rotation shaft into which a rotor is inserted externally is supported by the bearing in the center of the trunk casing. In the method, one bearing is inserted into one end of the trunk casing into which the stator is inserted internally. A gap gauge to provide a certain gap in the inner diameter of the stator and the outer diameter of the rotor is positioned inside the stator in the center from the other end of the trunk casing, and the rotation shaft into which the rotor is inserted externally is inserted. The end is inserted into the one bearing such that another bearing is inserted into the other end of the rotation shaft with the center of the one bearing as a reference. The trunk casing is welded together or separately to attach both the bearings to both ends of the trunk casing from a plurality of positions on the outer circumferential side of the trunk casing inside the other end of the trunk casing. Then, the gap gauges are removed.

The conventional magnet embedded rotor may prevent an output torque drop by the first protrusions. However, since the outer peripheral shape of the salient poles is formed in an arc around the center of the rotor, the distribution of magnetic-flux density of the motor contains harmonic components. As a result, the cogging torque cannot be sufficiently reduced.

In addition, consider the case that the conventional magnet embedded rotor is to be positioned at the center in the stator by the conventional motor assembly method described above. The conventional magnet embedded rotor includes the notches in outer peripheral surfaces between salient poles in the rotor core. Accordingly, if some of the same number of the gap gauges as stator teeth are interposed between the stator teeth and the notches, a gap is created between the gap gauges and the notches. Consequently, the conventional magnet embedded rotor cannot be positioned at the center in the stator.

Accordingly, it is an object in one aspect of an embodiment of the invention to provide a magnet embedded rotor, an electric motor provided with the rotor, and an assembly method of the electric motor capable of further reducing the cogging torque as well as reducing the output torque drop,

### SUMMARY

According to an aspect of an embodiment, a magnet embedded rotor includes a rotor iron core and a permanent magnet. The rotor iron core is formed of a magnet into a cylindrical shape where magnet embedding holes are circularly formed at regular intervals. The rotor iron core includes a nonmagnetic portion, salient poles, a notch groove, a bridge, and a first protrusion. The nonmagnetic portion is located at both circumferential-direction ends of each of the magnet embedding holes to prevent magnetic-flux short circuiting. The salient poles are located on the outer circumferential side of the magnet embedding holes. The notch groove is located at the outer circumference between an adjacent pair of the salient poles. The bridge is located between the notch groove and the nonmagnetic portion. The first protrusion protrudes outward from the center of the notch groove. The plate-like permanent magnet is embedded in each of the magnet embedding holes. The radius of each of the salient poles gradually decreases from the center of the salient pole toward the notch groove. The radius of the first protrusion is equal to the radius of the center of each of the salient pole.

According to another aspect of an embodiment, an electric motor includes the magnet embedded rotor as described above and a concentrated winding stator. The magnet embedded rotor is arranged in the concentrated winding stator in which, an tooth end surface of a tooth extending inward from a ring-like yoke faces at least one of the center of the salient pole of the magnet embedded rotor and the first protrusion with the same space therefrom.

According to still another aspect of an embodiment, there is provided an assembly method of the electric motor as described above, including: arranging each of a plurality of gage pieces of a gap gauge to ensure a constant space between the outer circumference of the rotor and the inner circumference of the stator at a position of the tooth end surface of the stator in circumferential direction facing the center of the salient pole of the magnet embedded rotor or facing the first protrusion; positioning the center of the salient pole of the magnet embedded rotor or the first protrusion at the position of each of the gage pieces in the circumferential direction; inserting the magnet embedded rotor into the stator; positioning the center of the magnet embedded rotor at the rotation center of the electric motor; fixing a bearing of the stator and the magnet embedded rotor positioned in the stator to a casing; and removing the gap gauge.

### BRIEF DESCRIPTION OF THE DRAWINGS

FIG. 1 is a plan view of an electric motor according to a first embodiment;
FIG. 2 is an enlarged view of a portion A illustrated in FIG. 1;
FIG. 3 is a perspective view of a conventional gap gauge;
FIG. 4 is a perspective view of a gap gauge used in the assembly of the electric motor of the first embodiment;
FIG. 5 is a plan view of the gap gauge used in the assembly of the electric motor of the first embodiment;
FIG. 6 is a cross-sectional view of gap gauges stacked in layers (in the state where gage pieces are open) used in the assembly of the electric motor of the first embodiment;
FIG. 7 is a plan view of an electric motor according to a second embodiment;
FIG. 8A is a plan view of an electric motor according to a third embodiment;
FIG. 8B is a partial enlarged view of the electric motor illustrated in FIG. 8A; and
FIG. 9 is a plan view of an electric motor according to a fourth embodiment.

### DESCRIPTION OF THE EMBODIMENT

Exemplary embodiments of the present invention will be described in detail below with reference to the accompanying drawings.

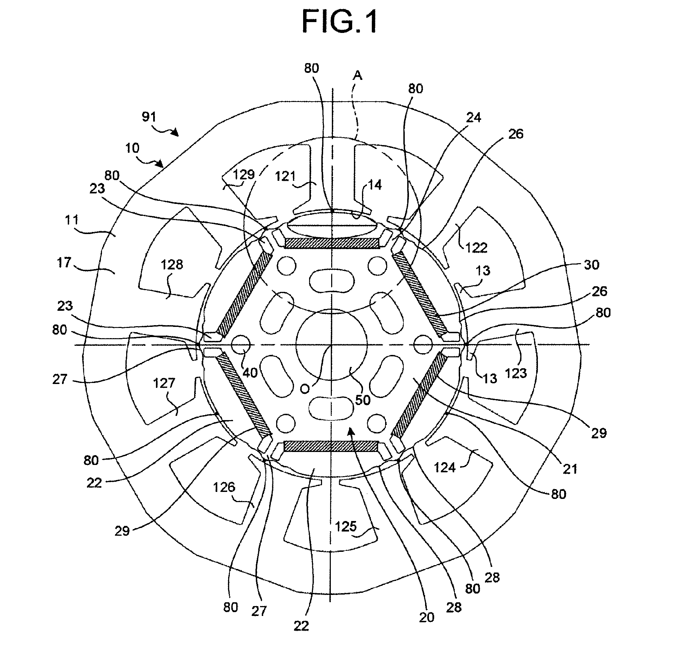

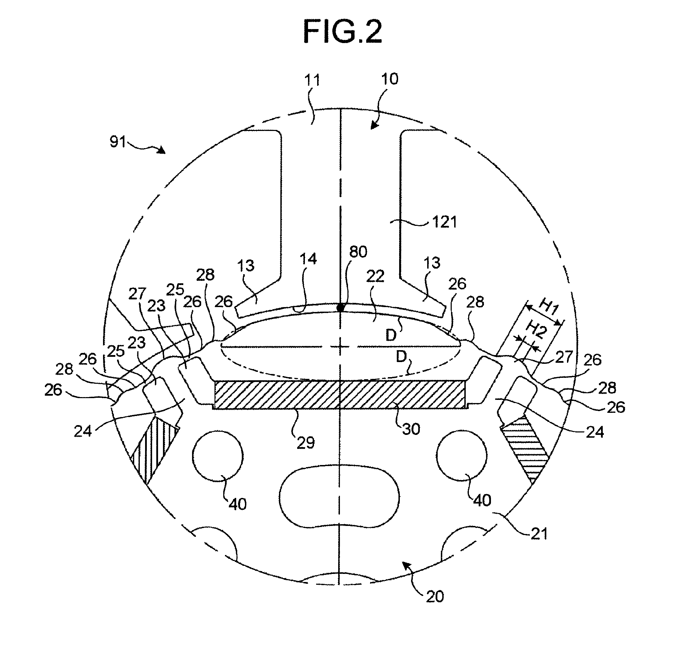

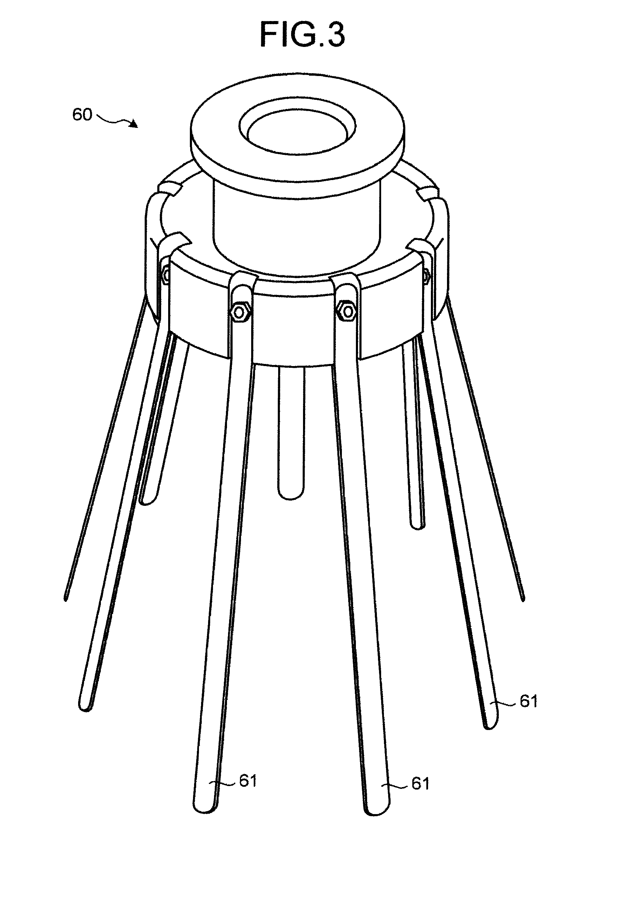

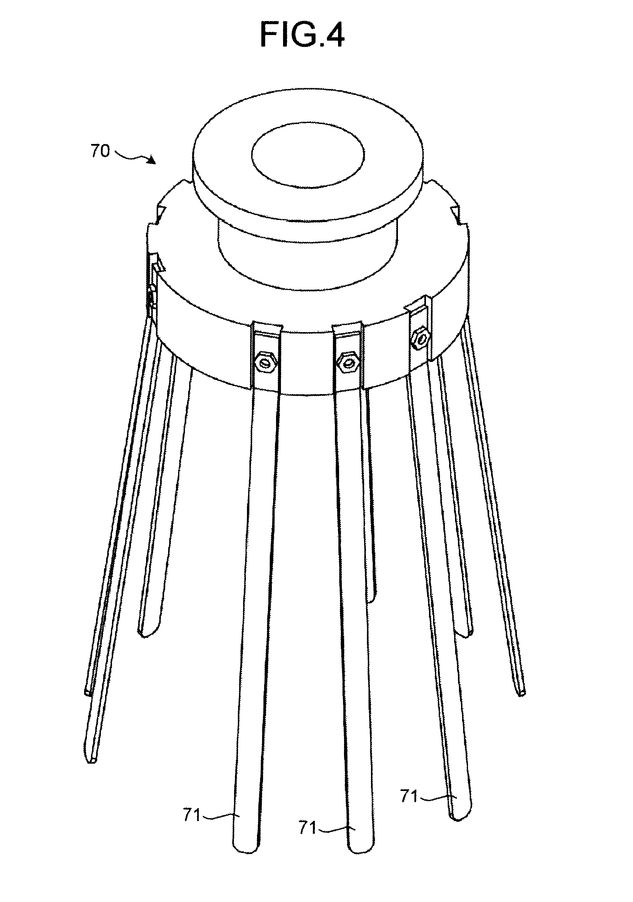

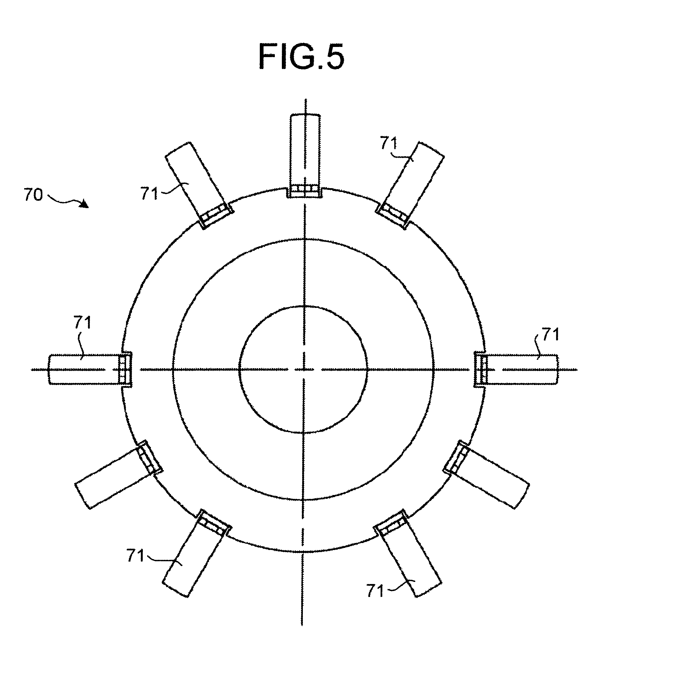

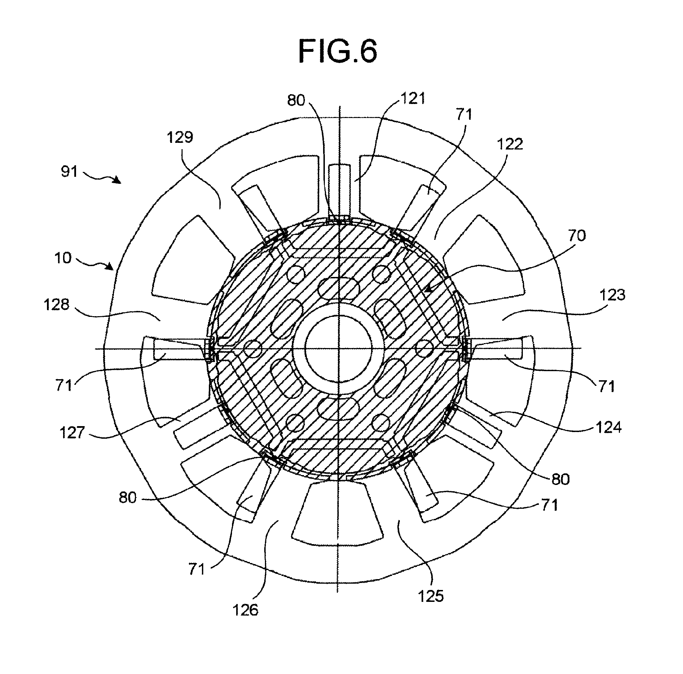

FIG. 1 is a plan view of an electric motor according to a first embodiment. FIG. 2 is an enlarged view of a portion A illustrated in FIG. 1. FIG. 3 is a perspective view of a conventional gap gauge. FIG. 4 is a perspective view of a gap gauge used in the assembly of the electric motor of the first embodiment. FIG. 5 is a plan view of the gap gauge used in the assembly of the electric motor of the first embodiment. FIG. 6 is a cross-sectional view of gap gauges stacked in layers used in the assembly of the electric motor of the first embodiment

As illustrated in FIGS. 1 and 2, according to the first embodiment, an electric motor 91 comprises a stator 10 and a magnet embedded rotor 20. The stator 10 is a concentrated winding stator including a stator iron core 11 where 9-pole teeth 121 to 129 extending inward from a ring-like yoke 17 are arranged at intervals of 40° and each of them is concentrically wound with a three-phase stator winding wire (not illustrated). The magnet embedded rotor 20 includes a cylindrical rotor iron core 21 where six elongated magnet embedding holes 29 are circularly formed at regular intervals and plate-like permanent magnets 30 are embedded in the magnet embedding holes 29, respectively.

The stator iron core 11 is formed of a plurality of thin silicon steel plates (magnets) in layers into a substantially cylindrical shape. At the end of the teeth 212 to 129, there are formed edges 13 that extend in both circumferential directions. The teeth 212 to 129 each has an arc-like tooth end surface 14 with the rotation center O of the electric motor 91 as the center of curvature. The magnet embedded rotor 20 is inserted into an cylindrical internal space surrounded by the tooth end surfaces 14 to be arranged.

As with the stator iron core 11, the rotor iron core 21 is formed of a plurality of thin silicon steel plates (magnets) in layers into a substantially cylindrical shape. The stator iron core 11 is integrated by six rivets arranged at intervals of 60° at positions near the outer circumference. In the center of the rotor iron core 21, a rotation shaft 50 is inserted and fixed.

The six plate-like permanent magnets 30 are embedded in the magnet embedding holes 29 circularly formed at regular intervals, respectively, to form the respective sides of a hexagon with the rotation center O as the center near the outer circumference of the rotor iron core 21. The outer circumferential side of the magnet embedding holes 29 (the permanent magnets 30) of the rotor iron core 21 forms a salient pole 22. At the both circumferential-direction ends of the magnet embedding holes 29 of the rotor iron core 21, there is formed a space 23 extending toward the outer circumference of the rotor iron core 21 as a nonmagnetic portion to prevent magnetic-flux short circuiting.

The rotor iron core 21 between an adjacent pair of the spaces 23 forms a reinforcing rib 24. The rotor iron core 21 on the outer circumferential side of the space 23 (between the space 23 and a notch groove 26 described later) forms a bridge 25 (see FIG. 2) that connects between the salient pole 22 and the reinforcing rib 24. To make it difficult for a magnetic-flux to pass through due to magnetic saturation, the bridge 25 is formed as narrow as possible (for example, about 0.5 millimeter) to the extent that the width does not present an obstacle to the fabrication.

The notch groove 26 is formed at the outer circumference of the rotor iron core 21 between an adjacent pair of the salient poles 22. In the center of the notch groove 26 and on the outer circumferential side of the reinforcing rib 24, there is formed a first protrusion 27 that protrudes outward. In the notch grooves 26 on both circumferential-direction sides of the first protrusion 27, there are formed two second protrusions 28 that protrude outward.

As illustrated in FIG. 2, the circumferential width H1 of the base portion of the first protrusion 27 is 2.5 times wider than the circumferential width H2 of the end portion. Besides, the circumferential width of the base portion of the second protrusion 28 is wider than that of the end portion. This is because a strong centrifugal force is not to act on lubricating oil if the electric motor 91 is used in a rotary compressor to prevent poor lubrication of the rotary compressor. More specifically, if the magnet embedded rotor 20 applies a strong centrifugal force to lubricant oil in a high-speed rotation range, the lubricant oil is pushed in a space of the stator 10 or inside a winding wire and is accumulated. Accordingly, the oil level of the lubricant oil lowers, which leads to poor lubrication of the rotary compressor. The corners of the base portion and the end portion of the first protrusion 27 and the second protrusion 28 are formed in a curve.

The radius from the rotation center O to the top of the first protrusion 27 is the same as the radius from the rotation center O to the center of the salient pole 22. The radius from the rotation center O to the top of the second protrusion 28 is smaller than the radius from the rotation center O to the top of the first protrusion 27. To reduce the cogging torque and also the vibration noise (torque ripple), preferably, the second protrusion 28 is located near the salient pole 22.

The outline of the salient pole 22 is formed by an elliptic curve D so that the radius of the salient pole 22 from the rotation center O gradually decreases from the center of the salient pole 22 toward the notch groove 26. The outline of the salient pole 22 may be formed by an elliptic curve with a radius smaller than the radius from the rotation center O to the salient pole center.

Since the radius of the salient pole 22 from the rotation center O gradually decreases from the center of the salient pole 22 toward the notch groove 26, harmonic components of the distribution of magnetic-flux density caused by the permanent magnets 30 can be reduced and be close to the sinusoidal wave, which thereby reduces the cogging torque. Thus, it is possible to reduce the vibration/noise of the electric motor.

As illustrated in FIG. 1, when the magnet embedded rotor 20 is arranged in the stator 10, the center of the salient pole 22 of the magnet embedded rotor 20 faces the tooth end surface 14 of the teeth 121, 124, and 127, while the first protrusion 27 faces the tooth end surface 14 of the teeth 122, 123, 125, 126, 128, and 129. The distance between the tooth end surface 14 and the center of the salient pole 22 is the same as the distance between the tooth end surface 14 and the first protrusion 27.

In the following, a description will be given of the assembly method of the electric motor according to the first embodiment. It is assumed herein that the stator 10 is a 9-pole stator and the magnet embedded rotor 20 is a 6-pole rotor as illustrated in FIG. 1. In this case, if gage pieces 61 of nine conventional gap gauges 60 as illustrated in FIG. 3 are positioned in the center of the tooth end surfaces 14 of the teeth 121 to 129, respectively, and the magnet embedded rotor 20 is inserted into the stator 10, the center of the salient pole 22 of the magnet embedded rotor 20 comes in contact with the gage pieces 61 in the teeth 121, 124, and 127. On the other hand, in the teeth 122, 123, 125, 126, 128, and 129, the second protrusion 28 faces the gage pieces 61. The radius of the top of the second protrusion 28 is smaller than that of the center of the salient pole 22 and the top of the first protrusion 27. This creates a gap to the gage pieces 61. As a result, the center of the magnet embedded rotor 20 cannot be positioned at the rotation center O.

FIGS 4 to 6 illustrate the assembly method of the electric motor according to the first embodiment. A gap gauge 70 is used to ensure a constant space between the rotor outer circumference and the stator inner circumference. The gap gauge 70 is arranged such that gage pieces 71 corresponding to the teeth 122, 123, 125, 126, 128, and 129 are shifted in the circumferential direction to face the first protrusion 27 of the magnet embedded rotor 20. The center of the salient pole 22 of the magnet embedded rotor 20 or the first protrusion 27 is positioned to each of the gage pieces 71 in the circumferential directions, and the magnet embedded rotor 20 is inserted into the stator 10. Since the radius of the center of the salient pole 22 is the same as the radius of the top of the first protrusion 27, the center of the salient pole 22 comes in contact with the gage pieces 71 in the teeth 121, 124, and 127 (position of a black dot 80 in FIGS. 1 and 6). Meanwhile, in the teeth 122, 123, 125, 126, 128, and 129, the top of the first protrusion 27 comes in contact with the gage pieces 71 (position of the black dot 80 in FIGS. 1 and 6). Thus, the center of the magnet embedded rotor 20 can be positioned at the rotation center O. In this state, the bearing (not illustrated) of the stator 10 and the magnet embedded rotor 20 is fixed to the casing. After that, the gap gauge 70 is removed from the electric motor 91.

As described above, according to the first embodiment, the electric motor can be assembled while the rotation center of the magnet embedded rotor 20 can be positioned at the rotation center O of the electric motor 91.

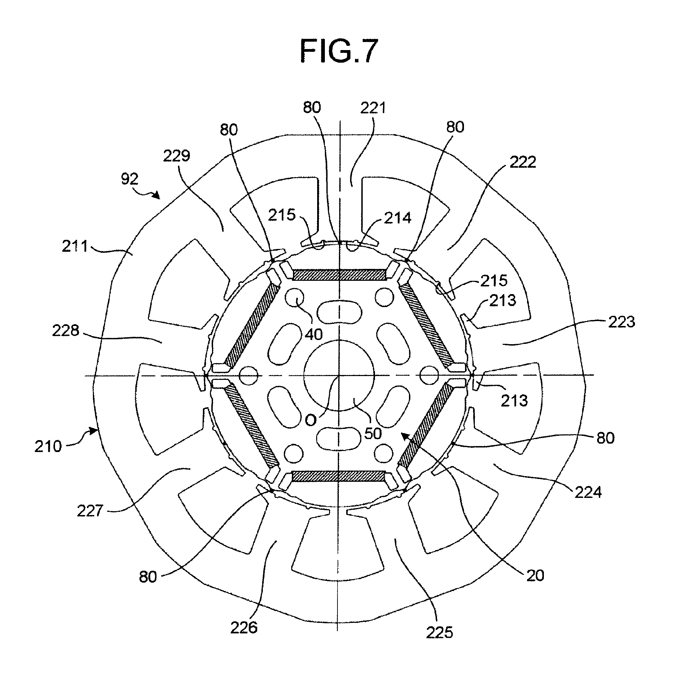

FIG. 7 is a plan view of an electric motor according to a second embodiment. As illustrated in FIG. 7, an electric motor 92 comprises a stator 210 and the magnet embedded rotor 20. The stator 210 is a concentrated winding stator including a stator iron core 211 where 9-pole teeth 221 to 229 are arranged at intervals of 40° and each of them is concentrically wound with a three-phase stator winding wire (not illustrated). The magnet embedded rotor 20 is basically the same as previously described in the first embodiment.

The stator iron core 211 is formed of a plurality of thin silicon steel plates (magnets) in layers into a substantially cylindrical shape. At the end of the teeth 221 to 229, there are formed edges 213 that extend in both circumferential directions. The teeth 221 to 229 each has an arc-like tooth end surface 214 with the rotation center O of the electric motor 92 as the center of curvature. In the tooth end surface 214 of the stator iron core 211, there are formed two grooves 215 in the axial direction.

As described above, in the electric motor 92 according to the second embodiment, the two grooves 215 are formed in the axial direction in the tooth end surface 214 of the stator iron core 211. Accordingly, harmonic components of the induced voltage and the cogging torque can be reduced. Thus, the torque variation can be reduced.

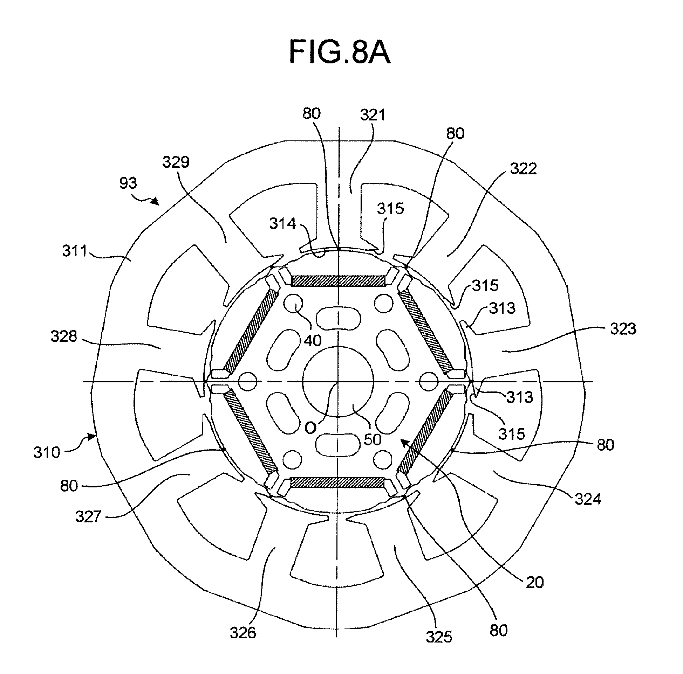

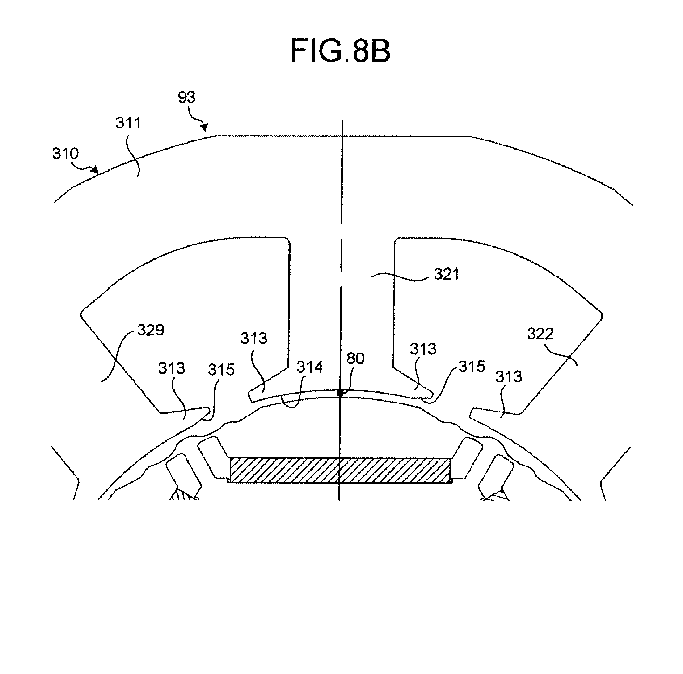

FIG. 8A is a plan view of an electric motor according to a third embodiment. FIG. 8B is a partial enlarged view of the electric motor illustrated in FIG. 8A. As illustrated in FIG. 8A, an electric motor 93 comprises a stator 310 and the magnet embedded rotor 20. The stator 310 is a concentrated winding stator including a stator iron core 311 where 9-pole teeth 321 to 329 are arranged at intervals of 40° and each of them is concentrically wound with a three-phase stator winding wire (not illustrated). The magnet embedded rotor 20 is basically the same as previously described in the first embodiment.

The stator iron core 311 is formed of a plurality of thin silicon steel plates (magnets) in layers into a substantially cylindrical shape. As illustrated in FIGS. 8A and 8B, at the end of the teeth 321 to 329, there are formed edges 313 that extend in both circumferential directions. The teeth 321 to 329 each has an arc-like tooth end surface 314 with the rotation center O of the electric motor 93 as the center of curvature. A tooth end surface edge 315 of one of the edges 313 on the both sides is obliquely cut out. Accordingly, the edges 313 are asymmetric.

As described above, in the electric motor 93 according to the third embodiment, the tooth end surface edge 315 of one of the edges 313 is obliquely cut out. Thus, the waveform of the induced electromotive force can be close to the sinusoidal wave without losing the effective magnetic flux (basic magnetic flux) of the permanent magnets 30, resulting in less harmonic magnetic flux and noise.

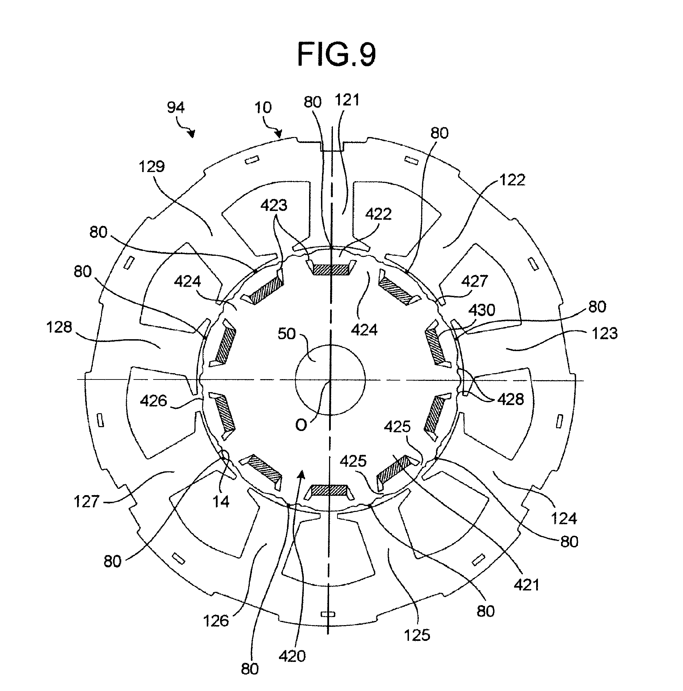

FIG. 9 is a plan view of an electric motor according to a fourth embodiment. As illustrated in FIG. 9, an electric motor 94 comprises the stator 10 and a magnet embedded rotor 420. The stator 10 is the same 9-pole stator previously described in the first embodiment. The magnet embedded rotor 420 is a 10-pole rotor that includes a cylindrical rotor iron core 421 where 10 plate-like magnets 430 are circularly embedded at regular intervals.

The 10 plate-like magnets 430 are circularly embedded at regular intervals to form the respective sides of a decagon with the rotation center O as the center near the outer circumference of the rotor iron core 21. The shapes of a salient pole 422, a space 423, a reinforcing rib 424, a bridge 425, a notch groove 426, a first protrusion 427, and a second protrusion 428 of the rotor iron core 421 is basically the same as those of the rotor iron core 21 of the first embodiment.

As illustrated in FIG. 9, when the magnet embedded rotor 420 is arranged in the stator 10, the center of the salient pole 422 of the magnet embedded rotor 420 faces the tooth end surface 14 of the teeth 121, 122, 123, 128, and 129, while the first protrusion 427 and the second protrusion 428 face the tooth end surface 14 of the teeth 124, 125, 126, and 127.

In the following, a description will be given of the assembly method of the electric motor according to the fourth embodiment. It is assumed herein that the stator 10 is a 9-pole stator and the magnet embedded rotor 420 is a 10-pole rotor as illustrated in FIG. 9. In this case, if the gage pieces 61 of the nine conventional gap gauges 60 as illustrated in FIG. 3 are positioned in the center of the tooth end surfaces 14 of the teeth 121 to 129, respectively, and the magnet embedded rotor 420 is inserted into the stator 10, the center of the salient pole 422 of the magnet embedded rotor 420 comes in contact with the gage pieces 61 in the teeth 121, 122, and 129. On the other hand, in the teeth 123, 124, 125, 126, 127, and 128, the first protrusion 427 and the second protrusion 428 face the gage pieces 61. The radius of the top of the second protrusion 428 is smaller than that of the center of the salient pole 422 and the top of the first protrusion 427. This creates a gap to the gage pieces 61. As a result, the center of the magnet embedded rotor 420 cannot be positioned at the rotation center O.

According to the fourth embodiment, in the teeth 123, 124, 125, 126, and 128, the gage pieces 61 are shifted in the circumferential direction to face the first protrusion 427 or the center of center of the salient pole 422 of the magnet embedded rotor 420. Since the radius of the center of the salient pole 422 is the same as the radius of the top of the first protrusion 427, the center of the salient pole 422 comes in contact with the gage pieces 61 in the teeth 121, 122, 123, 128, and 129 (position of the black dot 80 in FIG. 9). Meanwhile, in the teeth 124, 125, 126, and 127, the top of the first protrusion 427 comes in contact with the gage pieces 61 (position of the black dot 80 in FIG. 9). Thus, the center of the magnet embedded rotor 420 can be positioned at the rotation center O. In this state, the bearing (not illustrated) of the stator 10 and the magnet embedded rotor 420 is fixed to the casing. After that, the gap gauges 60 are removed from the electric motor 94.

As described above, according to the fourth embodiment, the electric motor can be assembled while the rotation center of the magnet embedded rotor 420 can be positioned at the rotation center O of the electric motor 94.

## Claims

1. A magnet embedded rotor comprising:
a rotor iron core (11, 211, 311) that is formed of a magnet into a cylindrical shape where magnet embedding holes (29) are circularly formed at regular intervals, the rotor iron core (11, 211, 311) including
a nonmagnetic portion (23, 423) that is located at both circumferential-direction ends of each of the magnet embedding holes (29) to prevent magnetic-flux short circuiting,
salient poles (22, 422) that are located on outer circumferential side of the magnet embedding holes (29),
a notch groove (26, 426) that is located at outer circumference between an adjacent pair of the salient poles (22, 422),
a bridge (25, 425) that is located between the notch groove (26, 426) and the nonmagnetic portion (23, 423), and
a first protrusion (27, 427) that protrudes outward from center of the notch groove (26, 426); and
a plate-like permanent magnet (30, 430) that is embedded in each of the magnet embedding holes (29), wherein
a radius of each of the salient poles (22, 422) gradually decreases from center of the salient pole (22, 422) toward the notch groove (26, 426), and
a radius of the first protrusion (27, 427) is equal to a radius of the center of each of the salient pole (22, 422).

2. An electric motor comprising:
the magnet embedded rotor (20, 420) as claimed in claim 1; and
a concentrated winding stator (10, 210, 310) in which the magnet embedded rotor (20, 420) is arranged, and an tooth end surface (14, 214, 314) of a tooth (121-129, 221-229, 321-329) extending inward from a ring-like yoke (17) faces at least one of the center of the salient pole (22, 422) of the magnet embedded rotor (20, 420) and the first protrusion (27, 427) with an equal space therefrom.

3. The electric motor according to claim 2, wherein a groove (215) is formed in an axial direction in the tooth end surface (14, 214, 314) of the stator (10, 210, 310).

4. The electric motor according to claim 2, wherein an edge of the tooth end surface (14, 214, 314) of the stator (10, 210, 310) is obliquely cut out.

5. A assembly method of the electric motor as claimed in claim 2 comprising:
arranging each of a plurality of gage pieces of a gap gauge to ensure a constant space between outer circumference of the rotor and inner circumference of the stator at a position of the tooth end surface of the stator in circumferential direction facing the center of the salient pole of the magnet embedded rotor or facing the first protrusion;
positioning the center of the salient pole of the magnet embedded rotor or the first protrusion at a position of each of the gage pieces in the circumferential direction;
inserting the magnet embedded rotor into the stator;
positioning a center of the magnet embedded rotor at a rotation center of the electric motor;
fixing a bearing of the stator and the magnet embedded rotor positioned in the stator to a casing; and
removing the gap gauge.
